# EUROPEAN PATENT SPECIFICATION

(11) **EP 3 977 291 B1**
(45) Date of publication and mention of the grant of the patent: **19.08.2026**
(21) Application number: 20812931.2
(22) Date of filing: 07.05.2020
(51) Int. Cl.: G06F 11/3668, G06Q 30/0201, G06Q 30/0251, G06Q 30/0601, H04L 67/01

(54) **A SYSTEM AND METHOD FOR PERFORMING A/B TESTING**
SYSTEM UND VERFAHREN ZUR DURCHFÜHRUNG VON A/B-TESTS
SYSTÈME ET PROCÉDÉ DE RÉALISATION DE TEST A/B

(30) Priority: 24.05.2019 TR 201907957
(43) Date of publication of application: 06.04.2022
(73) Proprietor: D-Market Elektronik Hizmetler Ve Ticaret Anonim Sirketi, Istanbul (TR)
(72) Inventor: HANKENDI, Alper, 34387 Istanbul (TR); DEMIRSOY, Yagiz, 34387 Sisli/Istanbul (TR); ARTUKASLAN, Merve, 34387 Sisli/Istanbul (TR)
(74) Representative: Demirkiran, Hasan
(86) International application number: PCT/TR2020/050401
(87) International publication number: WO 2020/242415

(56) References cited:
- WO-A1-2015/004452
- US-A1- 2011 087 733
- US-A1- 2011 161 825
- US-A1- 2015 026 522
- US-A1- 2016 189 201
- US-A1- 2020 183 999

## Description

### Technical Field

The invention relates to a system and method for performing A/B testing in order to show the web page of an internet application to users in different variations and to allow action to be taken according to the usage behavior of the users.

To clarify, the present invention relates to a method which secures that precise version of an A/B test scenario is displayed to corresponding test buckets in an internet application having cache memory that runs on mobile or computing devices.

More specifically, the present invention addresses the problem that even though the users are splitted into individual test groups, they are responded with a unified cache. In other words, same content is cached and displayed to the experiment and control groups which is a contradiction to the main goal of A/B testing. Therefore, cache content of test buckets are isolated from each other and default version of web service response by multiplying the cache and creating unique cache keys according to experimental versions of internet application.

### Prior Art

E-commerce sites are applications which emerged up by the increase in the internet usage and allows the trade to be carried out in a virtual environment. The concept of e-commerce is a method that allows shopping on a website for any product or service. With the e-commerce, trade is gone beyond just selling to a specific location.

With the advancement in the technology, the shopping habits of consumer have started to change. Recently, interest in e-commerce websites and other internet applications has been increasing. It is seen as an advantage for the consumers that e-commerce sites save time and space during shopping compared to physical stores and consumers can find each product together.

On the seller side, it attracts great attention due to the lower costs. For this reason, A/B testing is applied to increase sales. A/B testing can be applied in almost any area such as advertisements, website and mobile applications. A/B testing which, is one of the most frequently used methods in e-commerce sites, can be expressed as applying of behavior test on users in general. While implementing the A/B test, different content and design model for the website can be directed to different users.

A kind of experiment is done with the A/B testing. Different variations with the control group are evaluated by users. As a result of the evaluation, by analyzing the data, it is determined which variation works better. Different decisions are made according to users' behavior and usage by showing the website page differently to the users with the A/B testing.

In the A/B test methods used currently, the cache of the website is created on the basis of the URL (Uniform Resource Locator). If the website has cache, the same result is shown to all users without interacting with the internet service running back. Showing the same result is an obstacle to A/B testing. In the prior methods, there is not any solution for performing the A/B testing although it has cache and for displaying the same web page content of an internet application with different contents by creating the cache and cache keys for the internet application.

This situation requires for emerging of a method which allows always the correct A/B group to be shown when performing the A/B test in an internet application having cache memory that runs on mobile or computing devices.

In the patent document no US2011161825A1, systems and methods for testing multiple page versions are disclosed.

In the patent document no US9077780, a solution is mentioned for performing A/B testing of a web page content. It provides that one of at least two different versions of web page that will be displayed to user, is chosen. However, here, there is not any solution for the A/B test to be performed although it has cache by displaying the same web page content of an internet application with different contents by being created according to the cache and cache keys of the internet application.

In the patent document no US8775603, it is mentioned a method that allows testing of website content variations to optimize website visitor conversions. Here, it is provided the website operators to create content variations, thereby the impact of these variations on conversion rates are scientifically tested and measured. Therefore, there is not any method which allows always the correct test group to be shown when performing the A/B test in an internet application having cache memory that runs on mobile or computing devices.

In the patent document no US10049169, it is mentioned a method that allows the usage of visitor content and web page feature for determining the content of the web page that will be displayed. However, here, there is not any solution for the A/B test to be performed although it has cache by displaying the same web page content with different contents by being created according to the cache and cache keys of the website.

As a result, the need for the A/B testing to be performed although it has cache by displaying the same web page content of an internet application with different contents by being created according to the cache and cache keys of the internet application, requires the present innovative solution to emerge up.

### Objectives and Short Description of the Invention

Aim of this invention is to present a system and method for performing A/B testing in order to show the web page of an internet application running on a computing or mobile device to users in different variations and to allow action to be taken according to the usage behavior of the users.

Another aim of this invention is to present a method which allows always the correct A/B group to be shown when performing the A/B test in an internet application having cache memory that runs on mobile or computing devices.

Another aim of this invention is to perform the A/B test although it has cache by displaying the same web page content of an internet application with different contents by being created according to the cache and cache keys of the internet application.

For achieving the aims given above, the invention presents a system which comprises; a client device for internet application users, a test server that allows the data of A/B testing applied on users to be obtained, a cache server where there is the page content for client device, an application server for an internet application that allows displaying of page content, another cache server where there is the page content for client device, a web server that allows the page content specific to the test group to be detected and sent to the client device.

The invention is defined in claim 1. It is based on a method for allowing the A/B testing to be performed in order to show the web page of the internet application running on a client device to users in different variations and to allow action to be taken according to the usage behavior of the users, and comprises the following steps:
- sending a request to the A/B test server by the client device in order to obtain the A/B test information for the relevant web page and the cache keys created specially for the A/B test groups,
- if the client device is included in the A/B test group; transmitting the test information, test group information and cache key information to the client device by the test server,
- transmitting the cache key information to the cache server by the client device in order to access the content of the web page,
- if the URL and cache key combination of the web page is already registered in the cache server; sending the result of the page to the client device by the cache server,
- if the cache key and URL information for the web page are not available on the cache server; sending a request with together URL information and cache key to the application server by the cache server in order to reach the content of the web page for obtaining the result of the relevant web page,
- sending the URL and cache key that came from the cache server, by the application server in order to receive the page content from another cache server,
- if the URL and cache key combination of the web page was previously registered on the other cache server; sending the result of the web page to the client device,
- if the URL and cache key combination of the web page is not found in the other cache server; sending a request for the web page with together the cache key information to the web server by the other cache server,
- sending the page content that is prepared in the web server for the relevant group by using the cache key of the test group, to the other back cache server as response,
- caching the response that came from the web server by combining it with the URL information and cache key of the website by the other cache server,
- sending the web page related response that came from the web server to the application server by the other cache server,
- sending the web page content which is prepared in the application server by using the result of A/B test group came from the other cache server, to the cache server,
- recording in the cache server the data came from the application server by combining it with the URL and cache key information and, sending the related web page content to the client device.

### Description of the Figures

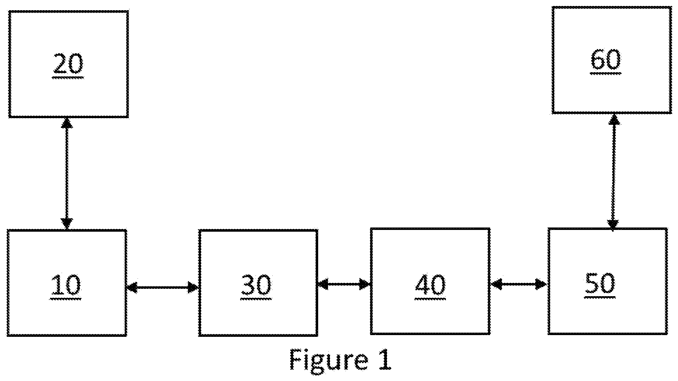

In Figure 1, system components related to the method and the relationship between these system components are shown.

### Reference Numbers

10. Client Device
20. Test Server
30. Cache Server
40. Application Server
50. Back Cache Server
60. Web Server

### Detailed Description of the Invention

The invention is a system and method for performing A/B testing in order to show the web page of an internet application to users in different variations and to allow action to be taken according to the usage behavior of the users.

With the present invention, It is always allowed the correct A/B group to be shown when performing the A/B test in an internet application having cache memory that runs on client devices (10) such as mobile or computing devices. It is provided the A/B test to be performed although it has cache by displaying the same web page content of an internet application with different contents by creating the internet application running on mentioned client device (10) according to the cache and cache keys.

System components related to the present innovative method and the relationship between these system components can be seen in Figure 1. Mentioned system generally comprises a client device (10) for internet application users, a test server (20) that allows the data of A/B testing applied on users to be obtained, a cache server (30) where there is the page content for client device (10), an application server (40) for an internet application that allows displaying of page content, a back cache server (50) where there is the page content for client device (10), a web server (60) that allows the page content specific to the test group to be detected and sent to the client device (10). In a preferred embodiment, mentioned web server (60) can be a search and navigation server.

In present invention; firstly; the client device (10) sends a request to the A/B test server (20) in order to obtain the A/B test information for the relevant web page and the cache keys created specially for the A/B test groups. If the client device (10) is included in the A/B test group; the test server (20) transmits the test information, test group information and cache key information to the client device (10). Then, the client device (10) transmits the cache key information to the cache server (30) in order to access the content of the web page. If the URL and cache key combination of the web page is already registered in the cache server (30); the cache server (30) sends the result of the page to the client device (10). If the cache key and URL information for the web page are not available on the cache server (30); the cache server (30) sends a request with together URL information and cache key to the application server (40) in order to reach the content of the web page for obtaining the result of the relevant web page. The application server (40) sends the URL and cache key that came from the cache server (30), in order to receive the page content from a back cache server (50). If the URL and cache key combination of the web page was previously registered on the back cache server (50); the result of the web page is sent to the client device (10). If the URL and cache key combination of the web page is not found in the back cache server (50); the back cache server (50) sends a request for the web page with together the cache key information to the web server (60). The page content that is prepared in the web server (60) for the relevant group by using the cache key of the test group is sent to the other back cache server (50) as response. In the back cache server (50), the response that came from the web server (60) is cached by combining with the URL information and cache key of the website. Then, the web page related response that came from the web server (60) is sent from the back cache server (50) to the application server (40). The web page content which is prepared in the application server (40) by using the result of A/B test group came from the back cache server (50) is sent to the cache server (30). The data came from the application server (40) is recorded in the cache server (30) by combining it with the URL and cache key information and, the related web page content is sent to the client device (10). Thus, the A/B test is performed by always displaying the correct A/B test group.

In the present invention, unlike all other methods, an web page is created according to the cache and cache keys. A/B test can be done even though it has cache by displaying the same web page with different contents. Mentioned cache key is the encoded version [Hex (Hexademical) Encode] of test ID number, variation ID number and various parameter values defined for variation. When it requires, the test information and parameters can be obtained by decoding of the parameters encoded with Hex. If there is more than one test content on the relevant page, the parameters of all tests on the page is located in the cache key as encoded.

## Claims

1. A method for providing A/B testing to be performed in order to show a web page of an internet application running on a client device (10) to users in different variations and to provide action to be taken according to a usage behavior of the users, and **characterized by**; comprising the following steps:
- sending a request to an A/B test server (20) by the client device (10) in order to obtain A/B test information for the web page and cache keys created specially for A/B test groups,
- if the client device (10) is included in the A/B test group; transmitting the A/B test information, test group information and cache key information to the client device (10) by the test server (20),
- transmitting the cache key information to a cache server (30) by the client device (10) in order to access a content of the web page,
- if a URL and a cache key combination of the web page is already registered in the cache server (30); sending the result of the page to the client device (10) by the cache server (30),
- if the cache key and the URL information for the web page are not available on the cache server (30); sending a request with together the URL information and cache key to an application server (40) by the cache server (30) in order to reach the content of the web page for obtaining the result of the web page,
- recording in the cache server (30) the data came from the application server (40) by combining it with the URL and cache key information and, sending the web page content to the client device (10).
- sending the URL and cache key that came from the cache server (30), by the application server (40) in order to receive the page content from a back cache server (50),
- if the URL and cache key combination of the web page was previously registered on the back cache server (50); sending the result of the web page to the client device (10),
- if the URL and cache key combination of the web page is not found in the back cache server (50); sending a request for the web page with together the cache key information to the web server (60) by the back cache server (50),
- sending the page content that is prepared in the web server (60) for the relevant group by using the cache key of the test group, to the other back cache server (50) as response,
- caching the response that came from the web server (60) by combining it with the URL information and cache key of the website by the back cache server (50),
- sending the web page related response that came from the web server (60) to the application server (40) by the back cache server (50),
- sending the web page content which is prepared in the application server (40) by using the result of A/B test group came from the back cache server (50), to the cache server (30)
- displaying the same web page content of an internet application with different contents for different test groups by being created according to the cache and cache keys of the internet application running on the client device (10) and, performing the A/B testing although there is cache related to the internet application.

## Patentansprüche

1. Ein Verfahren zur Bereitstellung von A/B-Tests, die durchgeführt werden sollen, um Benutzern eine Webseite einer auf einem Client-Gerät (10) ausgeführten Internet-Anwendung in verschiedenen Variationen anzuzeigen und um eine Maßnahme entsprechend einem Nutzungsverhalten der Benutzer bereitzustellen, **gekennzeichnet durch** die folgenden Schritte:
- Senden einer Anforderung an einen A/B-Testserver (20) durch das Client-Gerät (10), um A/B-Testinformationen für die Webseite und speziell für A/B-Testgruppen erstellte Cache-Schlüssel zu erhalten;
- falls das Client-Gerät (10) in der A/B-Testgruppe enthalten ist: Übermitteln der A/B-Testinformationen, Testgruppeninformationen und Cache-Schlüssel-Informationen an das Client-Gerät (10) durch den Testserver (20);
- Übermitteln der Cache-Schlüssel-Informationen an einen Cache-Server (30) durch das Client-Gerät (10), um auf einen Inhalt der Webseite zuzugreifen;
- falls eine Kombination aus URL und Cache-Schlüssel der Webseite bereits im Cache-Server (30) registriert ist: Senden des Ergebnisses der Seite an das Client-Gerät (10) durch den Cache-Server (30);
- falls der Cache-Schlüssel und die URL-Informationen für die Webseite nicht auf dem Cache-Server (30) verfügbar sind: Senden einer Anforderung zusammen mit den URL-Informationen und dem Cache-Schlüssel an einen Anwendungsserver (40) durch den Cache-Server (30), um den Inhalt der Webseite zu erreichen, um das Ergebnis der Webseite zu erhalten;
- Speichern der vom Anwendungsserver (40) stammenden Daten im Cache-Server (30), indem diese mit den URL- und Cache-Schlüssel-Informationen kombiniert werden, und Senden des Webseiteninhalts an das Client-Gerät (10);
- Senden der URL und des Cache-Schlüssels, die vom Cache-Server (30) stammen, durch den Anwendungsserver (40), um den Seiteninhalt von einem Back-Cache-Server (50) zu empfangen;
- falls die Kombination aus URL und Cache-Schlüssel der Webseite zuvor auf dem Back-Cache-Server (50) registriert wurde: Senden des Ergebnisses der Webseite an das Client-Gerät (10);
- falls die Kombination aus URL und Cache-Schlüssel der Webseite nicht im Back-Cache-Server (50) gefunden wird: Senden einer Anforderung für die Webseite zusammen mit den Cache-Schlüssel-Informationen an den Webserver (60) durch den Back-Cache-Server (50);
- Senden des Seiteninhalts, der im Webserver (60) für die relevante Gruppe unter Verwendung des Cache-Schlüssels der Testgruppe vorbereitet wurde, an den anderen Back-Cache-Server (50) als Antwort;
- Zwischenspeichern der vom Webserver (60) stammenden Antwort durch Kombinieren dieser mit den URL-Informationen und dem Cache-Schlüssel der Website durch den Back-Cache-Server (50);
- Senden der auf die Webseite bezogenen Antwort, die vom Webserver (60) stammt, an den Anwendungsserver (40) durch den Back-Cache-Server (50);
- Senden des Webseiteninhalts, der im Anwendungsserver (40) unter Verwendung des vom Back-Cache-Server (50) stammenden Ergebnisses der A/B-Testgruppe vorbereitet wurde, an den Cache-Server (30);
- Anzeigen desselben Webseiteninhalts einer Internet-Anwendung mit unterschiedlichen Inhalten für verschiedene Testgruppen, indem diese gemäß dem Cache und den Cache-Schlüsseln der auf dem Client-Gerät (10) ausgeführten Internet-Anwendung erstellt werden, und Durchführen des A/B-Tests, obwohl ein auf die Internet-Anwendung bezogener Cache vorhanden ist.

## Revendications

1. Procédé de test A/B destiné à afficher une page web d'une application Internet exécutée sur un dispositif client (10) selon différentes variantes en fonction des utilisateurs, et à déclencher une action en fonction de leur comportement d'utilisation, **caractérisé en ce qu'**il comprend les étapes consistant à:
- envoyer, par le dispositif client (10), une requête à un serveur de tests A/B (20) afin d'obtenir les informations relatives au test A/B de la page web ainsi que des clés de cache propres aux différents groupes de test A/B;
- lorsque le dispositif client (10) est affecté à un groupe de test A/B, le serveur de tests A/B (20) transmet audit dispositif client (10) les informations relatives au test A/B, les informations relatives au groupe de test ainsi que les informations relatives à la clé de cache;
- transmettre, par le dispositif client (10), les informations relatives à la clé de cache à un serveur de cache (30) afin d'accéder au contenu de la page web;
- lorsque la combinaison de l'URL de la page web et de la clé de cache est déjà enregistrée dans le serveur de cache (30), le serveur de cache (30) transmet le contenu de la page web au dispositif client (10);
- lorsque les informations relatives à l'URL et à la clé de cache de la page web ne sont pas disponibles sur le serveur de cache (30), le serveur de cache (30) adresse au serveur d'application (40) une requête contenant lesdites informations relatives à l'URL ainsi que la clé de cache, afin d'accéder au contenu de la page web;
- le serveur de cache (30) enregistre les données issues du serveur d'application (40) en les associant à l'URL et à la clé de cache, puis transmet le contenu de la page web au dispositif client (10);
- le serveur d'application (40) transmet au serveur de cache backend (50) l'URL et la clé de cache reçues du serveur de cache (30), afin d'obtenir auprès dudit serveur de cache backend le contenu de la page web;
- lorsque la combinaison de l'URL et de la clé de cache de la page web est déjà enregistrée sur le serveur de cache backend (50), celui-ci transmet le contenu de la page web au dispositif client (10);
- lorsque la combinaison de l'URL et de la clé de cache de la page web n'est pas disponible sur le serveur de cache backend (50), le serveur de cache backend (50) transmet au serveur web (60) une requête relative à la page web, comprenant les informations relatives à la clé de cache;
- le serveur web (60) renvoie, en réponse, au serveur de cache backend (50), le contenu de la page web généré à l'aide de la clé de cache du groupe de test concerné;
- le serveur de cache backend (50) met en cache la réponse reçue du serveur web (60) en l'associant aux informations relatives à l'URL et à la clé de cache de la page web;
- le serveur de cache backend (50) transmet au serveur d'application (40) le contenu de la page web reçu du serveur web (60);
- le serveur d'application (40) transmet au serveur de cache (30) le contenu de la page web généré à partir du résultat du groupe de test A/B reçu du serveur de cache backend (50);
- afficher différentes versions d'une même page web d'une application Internet pour les différents groupes de test en s'appuyant sur le cache et les clés de cache de l'application Internet exécutée sur le dispositif client (10), tout en permettant la réalisation de tests A/B malgré la présence d'un cache.
